## Europäisches Patentamt
## European Patent Office
## Office européen des brevets

(11) Veröffentlichungsnummer: **0 192 797**
**B1**

(12) **EUROPÄISCHE PATENTSCHRIFT**

(45) Veröffentlichungstag der Patentschrift:
29.06.88

(21) Anmeldenummer: **85102303.6**

(22) Anmeldetag: **01.03.85**

(51) Int. Cl.⁴: **A 47 J 31/40**

(54) **Kaffeemaschine.**

(43) Veröffentlichungstag der Anmeldung:
03.09.86 Patentblatt 86/36

(45) Bekanntmachung des Hinweises auf die Patenterteilung:
29.06.88 Patentblatt 88/26

(84) Benannte Vertragsstaaten:
**AT BE DE FR GB IT LU NL SE**

(56) Entgegenhaltungen:
**WO-A-82/01120**
**CH-A-521 115**
**CH-A-590 041**
**CH-A-635 740**
**FR-A-2 117 193**
**FR-A-2 338 028**

(73) Patentinhaber: **Baumann, Jules (Jun.), Bernstrasse 66, CH- 5034 Suhr (CH)**

(72) Erfinder: **Baumann, Jules (sen.), Bernstrasse 66, CH- 5034 Suhr (CH)**

(74) Vertreter: **Morva, Tibor, Morva Patentdienste Hintere Vorstadt 34 Postfach, CH- 5001 Aarau (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Kaffeemaschine, bei der heisses Wasser durch eine in einer zylindrischen Vertiefung liegende Kaffeepulverportion hindurchgedrückt wird, mit einem auf einer Fläche über die Vertiefung schwenkbaren, oben und unten offenen, ringförmigen Kaffeezubringer, einem heb- und senkbaren, in der gesenkten Betriebsstellung durch den eingeschwenkten Kaffeezubringer in die Vertiefung hineingeführten, das heisse Wasser zuführenden Oberkolben und einem heb- und senkbaren, bei der offenen Endstellung des Oberkolbens bis zur Oberkante der Vertiefung reichenden und bei der gesenkten Betriebsstellung des Oberkolbens in der unteren Öffnung der Vertiefung liegenden Unterkolben, wobei der Oberkolben mittels eines Joches mit einer heb- und senkbaren Antriebsstange verbunden ist.

Aus der WO-AB 201 120 ist eine Kaffeemaschine der eingangs erwähnten Art bekannt. Ein wesentlicher Nachteil dieser Kaffeemaschine besteht darin, dass für den Oberkolben, für den Unterkolben und für den Kaffeezubringer getrennte, eigene Antriebe vorgesehen sind. Diese Antriebe beanspruchen verhältnismässig viel Platz, brauchen eine relativ komplizierte Steuerung und verteuern die ganze Kaffeemaschine.

Bei den beispielsweise aus der CH-A-521 115 oder aus der CH-A-590 041 bekannten Kaffeemaschinen werden die meisten erwähnten Bauteile, also der Kaffeezubringer, der Oberkolben und der Unterkolben mittels mehreren hydraulisch betätigbaren Kolben-Zylinder-Aggregaten betätigt. Diese zahlreichen Antriebsaggregate sind voluminös, beanspruchen deshalb einen beträchtlichen Raum, machen dadurch die Kaffeemaschine verhältnismässig umfangreich und sind auch verhältnismässig teuer.

Es wird die Schaffung einer Kaffeemaschine bezweckt, mit der die vorerwähnten Probleme vermieden werden können.

Die erfindungsgemässe Kaffeemaschine ist dadurch gekennzeichnet, dass der Kaffeezubringer mittels des Joches mit der heb- und senkbaren Antriebsstange verbunden ist, und dass sich zwischen dem Joch und dem Kaffeezubringer eine Schwenkstange befindet, die mittels eines Wendeltriebs längs ihres Verlaufes im Joch drehbar gelagert ist und den Kaffeezubringer aus einer ersten, ausgeschwenkten Endstellung in eine zweite, zum Oberkolben und zum Unterkolben ausgerichtete Endstellung und umgekehrt schwenkt, während sich der Oberkolben von seiner offenen Endstellung bis zur Oberkante des Kaffeezubringers und umgekehrt bewegt.

Durch die vorerwähnte Massnahme kann nunmehr zumindest der Antrieb des Kaffeezubringers und des Oberkolbens durch eine einzige, gemeinsame Antriebsstange auf mechanische oder hydraulische Weise erfolgen. Eine solche Kaffeemaschine kann einen geringeren Platz einnehmen, und die erwähnte Antriebsart kann auch wesentlich preisgünstiger realisiert werden. Es ist vorteilhaft, wenn auch der Unterkolben von derselben Antriebsstange angetrieben wird.

In der Zeichnung ist ein Ausführungsbeispiel des Erfindungsgegenstandes im Ausschnitt dargestellt. Es zeigen:

Fig. 1 einen Teil der Kaffeemaschine, in schaubildlicher Darstellung, bei der der Kaffeezubringer von der Kaffeezubereitungsstelle weggeschwenkt worden ist, um eine neue Kaffeeportion aufzunehmen, und

Fig. 2 eine gleiche Darstellung wie in Fig. 1, wobei sich aber der Kaffeezubringer an der Kaffeezubereitungsstelle befindet, und die Kaffeemaschine parat ist, Kaffee herzustellen.

Die Kaffeemaschine weist ein ortsfestes Gefäss 1 auf, an dem ein Kaffee-Zubereitungsblock 2 befestigt ist. Ein Lagerbock 3 ist über einer Platte 4 ebenfalls ortsfest am Gefäss 1 festgelegt. Vom Kaffee-Zubereitungsblock 2 führt eine Kaffeeleitung 5 weg, die in nicht dargestellter Weise ein oder zwei Kaffee-Auslässe aufweist, aus denen dann der fertige Kaffee von der Maschine abgelassen wird. Der Kaffee-Zubereitungsblock 2 ist noch mit einem schräg nach unten weisenden Abrutschblech 6 für den verbrauchten Kaffeepulver-Kuchen versehen. Unterhalb des Zubereitungsblockes 2 befindet sich ein Antriebsritzel 7, das in einem ortsfesten Lagerbock 8 in beiden Drehrichtungen drehbar gelagert ist. Diese vorerwähnten Bauteile 1 bis 8 sind also ortsfest abgestützt, verändern dadurch nicht ihre Lage, wobei lediglich der Bauteil 7 um seine Längsmittelachse drehbar ist. Im Innern des Zubereitungsblockes 2 befindet sich eine zylindrische Vertiefung 9, die oben an einer Fläche 10 des Blockes 2 ausmündet und einen Boden 11 hat, von der eine nicht dargestellte ringförmige Rinne mit dem Innern der Kaffeeleitung 5 in Verbindung steht. Am Kaffee-Zubereitungsblock 2 ist noch eine Tischplatte 12 befestigt. Am Gefäss 1 befindet sich ein Ablaufstutzen 13 für heisses Wasser. Alle Bauteile 1 bis 6 und 8 bis 13 sind also unbeweglich.

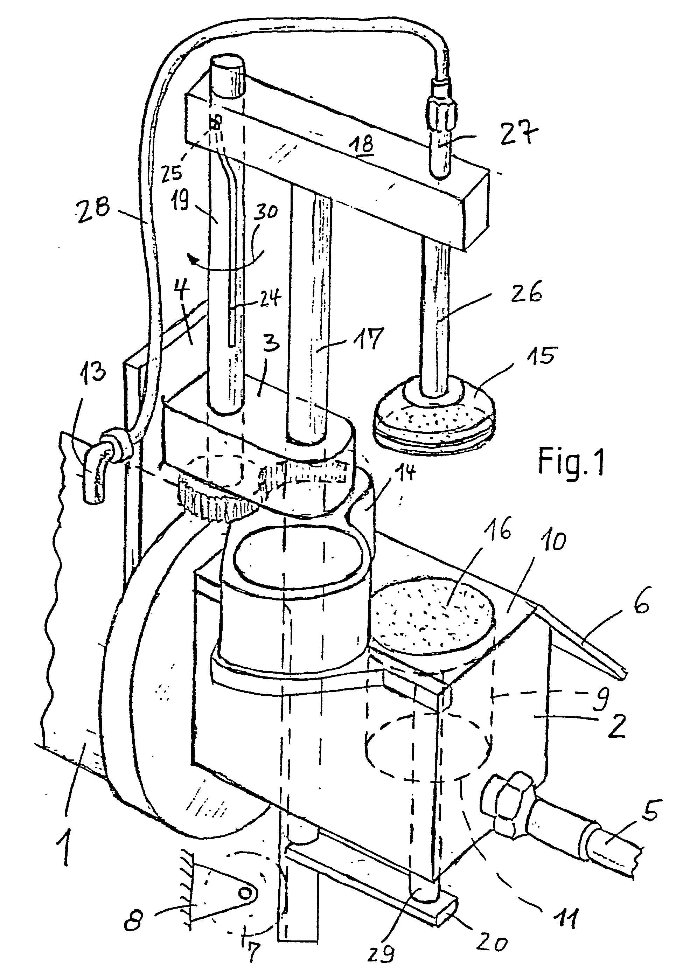

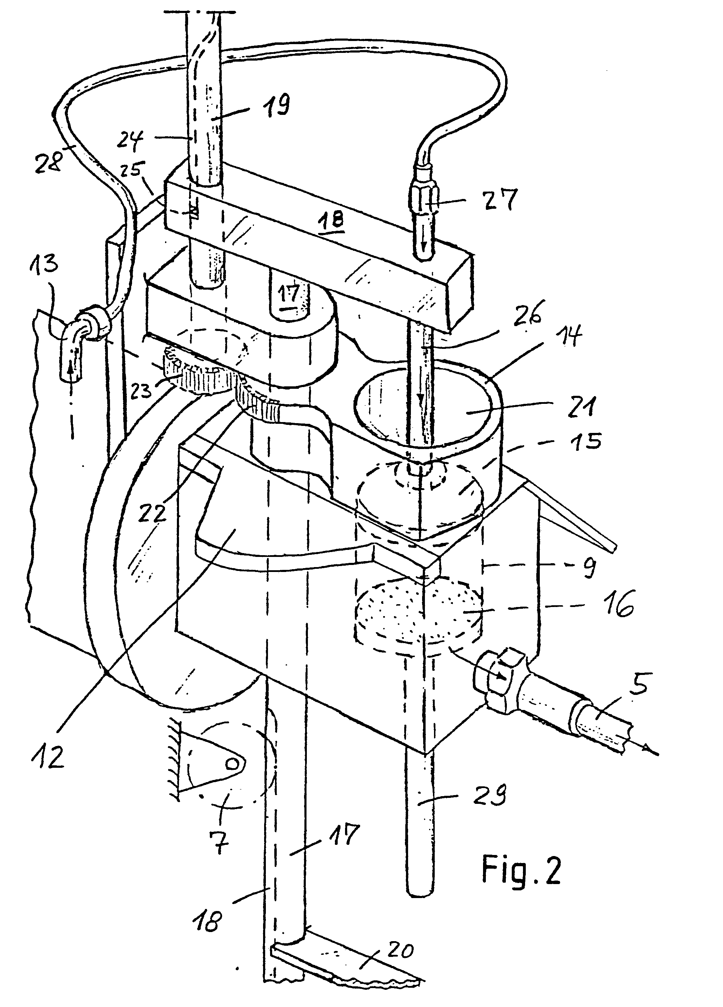

Die Kaffeemaschine hat einen Kaffeezubringer 14, einen Oberkolben 15 und einen Unterkolben 16. Es ist weiterhin eine Antriebsstange 17, ein Joch 18 und eine Schwenkstange 19 vorhanden. Diese Bauteile 14 bis 19 sind beweglich und in den Figuren 1 und 2 in verschiedenen Stellungen dargestellt.

Die Antriebsstange 17 ist im Lagerbock 3 heb- und senkbar verschiebbar geführt. Zusätzlich dient auch noch eine nicht dargestellte Bohrung im Kaffee-Zubereitungsblock 2 zur Führung dieser Antriebsstange 17. Die Antriebsstange 17 ist im unteren Bereich als Zahnstange ausgebildet, trägt also eine Verzahnung 18, in die das Antriebsritzel 7 eingreift. Am oberen Ende ist die Antriebsstange 17 mit dem Joch 18 verbunden. Am unteren Ende der Antriebsstange 17 ist noch ein Anschlag 20 befestigt. Die Antriebsstange 17 kann anstatt mechanisch auch hydraulisch betätigt sein.

Der Kaffeezubringer 14 ist mit einer Durchgangsbohrung 21 versehen und ist auf der zylindrischen Antriebsstange 17 zwischen zwei Stellungen frei drehbar gelagert. In der einen Endstellung des Kaffeezubringers 14 nach Fig. 1 wird die Durchgangsbohrung 21 unten von der Tischplatte 12 begrenzt. In der anderen Endstellung des Kaffeezubringers 14 nach Fig. 2 liegt die Durchgangsbohrung 21 ausgerichtet zum Oberkolben 15, zum Unterkolben 16 und damit auch zur Vertiefung 9. Die erläuterte Schwenkbewegung des Kaffeezubringers 14 erfolgt über ein Zahnsegment 22, das mit einem Antriebsrad 23 kämmt.

Die Schwenkstange 19 ist unten im Lagerbock 3 und oben im Joch 18 drehbar gelagert. Das Drehen der Schwenkstange 19 erfolgt über einen Wendeltrieb 24, 25. Letzterer umfasst einen um etwa 90° reichenden Schraubengang 24. Dieser Schraubengang 24 befindet sich in der Schwenkstange 19. Der Schraubengang 24 ist als Nut ausgebildet, die sich in der Mantelfläche der Schwenkstange 19 befindet. Am Joch 18 befindet sich ein Führungsorgan 25, das in den Schraubengang 24 eingreift. Dieses Führungsorgan 25 kann zum Beispiel ein Zapfen oder eine Rolle sein, die um eine Achse drehbar ist, die rechtwinklig zur Schwenkstange 19 liegt. Die Nut 24 stellt somit eine Kulissenführung des Wendeltriebs dar, und das Führungsorgan 25 ist eine in dieser Kulissenführung geführter Kulissenstein. Die Antriebsstange 17 ist im Lagerbock 3 und im Block 2 längs verschiebbar und undrehbar geführt.

Eine den Oberkolben 15 tragende Kolbenstange 26 ist am Joch 18 befestigt. An letzterem ist weiterhin ein Zulaufstutzen 27 befestigt. Die beiden Stutzen 13 und 27 sind mit einer Leitung 28 verbunden. Im Innern der Kolbenstange 26 verläuft ein Längskanal, der unten von einer Stirnfläche des Oberkolbens 15 begrenzt ist. Diese Stirnfläche ist als Sieb ausgebildet. Die in Fig. 1 auf der Höhe der Blockfläche 10 liegende obere Stirnfläche des Unterkolbens 16 ist ebenfalls als Sieb ausgebildet. An der nicht dargestellten Unterseite des Unterkolbens 16 münden ein oder zwei dünne Bohrungen nach unten aus, deren Austrittsmündungen also dem Boden 11 der zylindrischen Vertiefung 9 zugewandt sind. Der Unterkolben 16 hat eine Kolbenstange 29, die keinen Längskanal aufweis. Diese Kolbenstange 29 liegt im Bewegungsweg des Anschlags 20, wenn sich die Antriebsstange 17 in die Stellung nach Fig. 1 nach oben bewegt. Die Arbeitsweise mit der erläuterten Kaffeemaschine ist folgendermassen:

In Fig. 1 befindet sich der Kaffeezubringer 14 in einer zur Vertiefung 9 seitlich liegenden Stellung auf der Tischplatte 12, in der er durch eine nicht dargestellte Vorrichtung eine neue Portion Kaffeepulver erhält. Die obere Stirnfläche des Unterkolbens 16 befindet sich auf der Höhe der Fläche 10. Auf dieser oberen Stirnfläche des Unterkolbens 16 befindet sich ein nicht dargestellter Kaffeepulverkuchen, der also bei der vorhergehenden Kaffeezubereitung ausgepresst worden war. Wenn nunmehr Kaffee zubereitet werden soll, wird das Antriebsritzel 7 im Uhrzeigersinn angetrieben. Hierdurch wird die Antriebsstange 17 mit Joch 18 und Oberkolben 15 nach unten bewegt. Das im Joch 18 befestigte Führungsorgan 25 führt hierbei eine geradlinige Bewegung nach unten durch. Die im ortsfesten Lagerbock 3 nicht längs bewegbare aber drehbar gelagerte Schwenkstange 19 wird durch die Nut 24 in Fig. 1 in Richtung eines Pfeiles 30 gedreht. Hierdurch treibt das Antriebsrad 23 der Schwenkstange 19 über das Zahnradsegment 22 auf den Kaffeezubringer 14 und schwenkt diesen von der Stellung in Fig. 1 zur Stellung nach Fig. 2. Hierdurch gelangen Oberkolben 15, Durchgangsbohrung 21 und Vertiefung 9 in eine zueinander ausgerichtete Lage, so dass der Oberkolben 15 in die Durchgangsbohrung 21 des Kaffeezubringers 14 eintritt. Bei der erläuterten Schwenkbewegung des Kaffeezubringers 14 von der Stellung in Fig. 1 zur Stellung nach Fig. 2 wischt der Kaffeezubringer über die obere Stirnfläche des Unterkolbens 16 und über die Fläche 10 des Blocks 2 und schiebt hierbei den vorerwähnten verbrauchten Kaffeepulverkuchen von der Fläche 10 weg auf das Abrutschblech 6, zum Wegführen des verbrauchten Kaffeepulvers. Das neu zur Verfügung stehende Kaffeepulver befindet sich nunmehr innerhalb der Durchgangsbohrung 21 des Kaffeezubringers 14 und zwischen der unteren Stirnfläche des Oberkolbens 15 und der oberen Stirnfläche des Unterkolbens 16. Beim weiteren nach unten Bewegen der Antriebsstange 17 schiebt der Oberkolben 15 das neue Kaffeepulver und den Unterkolben 16 innerhalb der Vertiefung 9 nach unten in den Kaffee-Zubereitungsblock 2 gemäss der Stellung nach Fig. 2. Der Antrieb des Antriebsritzels 7 ist nunmehr beendet, und über ein weiteres Signal fliesst heisses Wasser zum Beispiel mit einem Druck von 8 bar über den Ablaufstutzen 13 durch die Leitung 28, durch den Zulaufstutzen 27 und durch die Kolbenstange 26 hindurch. Das heisse Wasser wird nunmehr durch das in der Vertiefung 9 befindliche und zwischen den beiden Siebflächen von Oberkolben 15 und Unterkolben 16 gehaltene Kaffeepulver hindurchgedrückt, worauf dann der fertige Kaffee über die Kaffeeleitung 5 wegfliesst. Die Durchflussrichtung des heissen Wassers und des fertigen Kaffees ist in Fig. 2 mit Pfeilen dargestellt.

Soll neuer Kaffee zubereitet werden, erhält das Antriebsritzel 7 in Fig. 2 einen Antrieb entgegen dem Uhrzeigersinn, wodurch die Antriebsstange 17 mit Anschlag 20 nach oben geschoben werden. Das Joch 18 bewegt den Oberkolben 15 nach oben, und das Führungsorgan 25 verläuft zuerst innerhalb eines vertikalen Abschnitts der Nut 24. Wenn sich der Oberkolben 15 oberhalb des Kaffeezubringers 14 befindet, gelangt das Führungsorgan 25 auf den Schraubengang der Nut 24, wodurch die Schwenkstange 19 entgegen dem Uhrzeigersinn geschwenkt wird, wobei über das Zahnradgetriebe 22 und 23 der Kaffeezubringer 14 in die Stellung nach Fig. 1 geschwenkt wird. Beim weiteren nach oben Bewegen der Antriebsstange 17 gelangt ihr Anschlag 20 zur Anlage mit der Kolbenstange 29 des Unterkolbens 16 und hebt diesen innerhalb der Vertiefung 9 nach oben bis zur Stellung nach Fig. 1, wobei der verbrauchte Kaffeepulverkuchen auf der Höhe der Fläche 10 zu liegen kommt.

Die beschriebene Kaffeemaschine ist nicht nur einfach aufgebaut und wirtschaftlich vorteilhaft, sondern bietet auch Betriebsvorteile. Dank der besonderen Ausbildung der Kaffeemaschine sind nämlich die Zeitabstände zwischen den aufeinanderfolgenden Kaffeezubereitungen relativ kurz. Bei gleichbleibender Dauer der Heiswasserdurchströmung durch das Kaffeepulver ist die für die Bewegung von Kaffeezubringer, Ober- und Unterkolben benötigte Zeit relativ kurz.

## Patentansprüche

1. Kaffeemaschine, bei der heisses Wasser durch eine in einer zylindrischen Vertiefung (9) liegende Kaffeepulverportion hindurchgedrückt wird, mit einem auf einer Fläche (10) über die Vertiefung (9) schwenkbaren, oben und unten offenen, ringförmigen Kaffeezubringer (14), einem heb- und senkbaren, in der gesenkten Betriebsstellung durch den eingeschwenkten Kaffeezubringer (14) in die Vertiefung (9) hineingeführten, das heisse Wasser zuführenden Oberkolben (15) und einem heb- und senkbaren, bei der offenen Endstellung des Oberkolbens (15) bis zur Oberkante der Vertiefung (9) reichenden und bei der gesenkten Betriebsstellung des Oberkolbens (15) in der unteren Öffnung der Vertiefung (9) liegenden Unterkolben (16), wobei der Oberkolben (15) mittels eines Joches (18) mit einer heb- und senkbaren Antriebsstange (17) verbunden ist, dadurch gekennzeichnet, dass der Kaffeezubringer (14) mittels des Joches (18) mit der heb- und senkbaren Antriebsstange (17) verbunden ist, und dass sich zwischen dem Joch (18) und dem Kaffeezubringer (14) eine Schwenkstange (19) befindet, die mittels eines Wendeltriebs (24, 25) längs ihres Verlaufes im Joch (18) drehbar gelagert ist und den Kaffeezubringer (14) aus einer ersten, ausgeschwenkten Endstellung in eine zweite, zum Oberkolben (15) und zum Unterkolben (16) ausgerichtete Endstellung und umgekehrt schwenkt, während sich der Oberkolben (15) von seiner offenen Endstellung bis zum Oberkante des Kaffeezubringers (14) und umgekehrt bewegt.

2. Maschine nach Anspruch 1, dadurch gekennzeichnet, dass der Wendeltrieb (24, 25) einen um etwa 90° reichenden Schraubengang (24) umfasst.

3. Maschine nach Anspruch 2, dadurch gekennzeichnet, dass der Schraubengang (24) bei der Schwenkstange (19) vorhanden ist, und in den Schraubengang (24) zumindest ein Führungsorgan (25) des Jochs (18) eingreift.

4. Maschine nach Anspruch 1, dadurch gekennzeichnet, dass der Wendeltrieb (24, 25) eine Kulissenführung (24) und einen darin geführten Kulissenstein (25) umfasst.

5. Maschine nach Anspruch 4, dadurch gekennzeichnet, dass der Kulissenstein als Rolle ausgebildet ist, die um eine Achse drehbar ist, die rechtwinklig zur Schwenkstange (19) liegt.

6. Maschine nach Anspruch 1, dadurch gekennzeichnet, dass die Schwenkstange (19) über ein Zahnradgetriebe (22, 23) mit dem Kaffeezubringer (14) verbunden ist.

7. Maschine nach Anspruch 1, dadurch gekennzeichnet, dass die Antriebsstange (17) mit einem Anschlag (20) für den Unterkolben (19) versehen ist, und dass letzterer im Bewegungsweg der sich hebenden Antriebsstange (17) mit Anschlag (20) liegt.

8. Maschine nach Anspruch 4, dadurch gekennzeichnet, dass die Kulissenführung (24) als Nut ausgebildet ist, die sich in der Mantelfläche der Schwenkstange (19) befindet.

9. Maschine nach Anspruch 1, dadurch gekennzeichnet, dass die Antriebsstange (17) als Zahnstange (18) ausgebildet ist, in die ein Antriebsritzel (7) eingreift.

## Claims

1. A coffee machine, in which hot water is forced through a portion of coffee powder which lies in a cylindrical recess (9), having an annular coffee feeder (14) which is open above and below and is pivotable on a surface (10) over the recess (9), having a raisable and lowerable upper piston (15) which supplies the hot water and is passed in the lowered operating position into the recess (9) by the inwardly pivoted coffee feeder (14), and having a raisable and lowerable lower piston (16) which in the lowered operating position of the upper piston (15) lies in the lower opening of the recess (9) and extends in the open end position of the upper piston (15) up to the upper edge of the recess (9), wherein the upper piston (15) is connected with the aid of a yoke (18) to a raisable and lowerable drive rod (17), characterised in that the coffee feeder (14) is connected with the aid of the yoke (18) to the raisable and lowerable drive rod (17), and that between the yoke (18) and the coffee feeder (14) a pivot rod (19) is located which is pivotally mounted in the yoke (18) with the aid of a helical drive (24, 25) along its length and pivots the coffee feeder (14) out of a first outwardly pivoted end position into a second end position aligned with the upper piston (15) and with the lower piston (16) and vice versa, while the upper piston (15) moves from its open end position up to the upper edge of the coffee feeder (14) and vice versa.

2. A machine according to claim 1, characterised in that the helical drive (24, 25) includes a screw thread (24) which extends about 90 degrees.

3. A machine according to claim 2, characterised in that the screw thread (24) is provided at the pivot rod (19), and at least one guide element (25) of the yoke (18) engages into the screw thread (24).

4. A machine according to claim 1, characterized in that the helical drive (24, 25) includes a connecting link guide (24) and a connecting link block (25) guided therein.

5. A machine according to claim 4, characterised in that the connecting link block is formed as a roller which is pivotable about an axis which lies at right angles to the pivot rod (19).

6. A machine according to claim 1, characterized in that the pivot rod (19) is connected to the coffee feeder (14) by means of a toothed wheel gearing (22, 23).

7. A machine according to claim 1 characterized in that the drive rod (17) is provided with a stop (20) for the lower piston (19) and that the said lower piston lies in the path of movement of the rising drive rod (17) having stop (20).

8. A machine according to claim 4, characterised in that the connecting link guide (24) is formed as a groove which is located in the sleeve surface of the pivot rod (19).

9. A machine according to claim 1, characterised in that the drive rod (17) is formed as a toothed rod (18), which a drive pinion (7) engages.

**Revendications**

1. Machine à café, dans laquelle de l'eau chaude est refoulée à travers une portion de café en poudre se trouvant dans une cavité cylindrique (9) comprenant un dispositif d'alimentation en café (14) de forme annulaire, qui est ouvert au-dessus et au-dessous et basculant sur une surface (10) au-dessus de la cavité (9), avec un piston supérieur (15), relevable et abaissable s'introduisant dans la position de fonctionnement, dans la cavité, grâce au dispositif d'alimentation en café (14) qui est basculé et amenant l'eau chaude et comprenant un piston inférieur (16), relevable et abaissable, arrivant dans la position finale ouverte du piston supérieur (15), jusqu'à l'arête supérieure de la cavité (9) se trouvant dans la position abaissée de fonctionnement du piston supérieur (15), dans l'orifice inférieur de la cavité (9), le piston supérieur (15) étant à cette occasion relié à une tige d'entraînement (17) relevable et abaissable au moyen d'une travée formant culasse (18), caractérisée en ce que l'alimentation en café (14) est reliée à la tige d'entraînement (17) relevable et abaissable, au moyen de la culasse (18) et qu'une tige oscillante (19) se trouve entre la culasse (18) et l'alimentation en café (14), qui est guidée au moyen d'une transmission hélicoïdale (24, 25), de manière tournante, le long de son développement dans la culasse (18) et qui bascule l'alimentation en café (14), depuis sa première position finale basculée, jusque dans une deuxième position finale alignée par rapport au piston supérieur (15) et au piston inférieur (6) et inversement, pendant que le piston supérieur (15) est déplacé depuis sa position finale ouverte, jusqu'à l'arête supérieure du dispositif d'alimentation en café (14) et inversement.

2. Machine selon la revendication 1, caractérisée en ce que la transmission hélicoïdale (24, 25) comprend un pas de filet (24) faisant approximativement 90°.

3. Machine selon la revendication 2, caractérisée en ce que le pas de filet (24) se trouve sur la tige de basculement (19) et qu'il engrène au moins un organe de guidage (25) de la culasse (18) dans le pas de filet (24).

4. Machine selon la revendication 1, caractérisée en ce que la transmission hélicoïdale (24, 25) comprend un guidage de coulisseau (24) et un coulisseau (25) qui y est guidé.

5. Machine selon la revendication 4, caractérisée en ce que le coulisseau a la forme d'un galet, qui tourne sur un axe qui se situe à angle droit, par rapport à la tige de basculement (19).

6. Machine selon la revendication 1, caractérisée en ce que la tige de basculement (19) est reliée à un dispositif d'alimentation en café (14) par une transmission à roues dentées (22, 23).

7. Machine selon la revendication 1, caractérisée en ce que la tige d'entraînement (17) est pourvue d'une butée (20) pour le piston inférieur (19) et que ce dernier repose sur la butée (20), lors du trajet de déplacement de la tige d'entraînement (17) qui se relève.

8. Machine selon la revendication 4, caractérisée en ce que le guidage de coulisseau est sous forme d'une gorge, qui se trouve dans la surface d'enveloppe de la tige de basculement (19).

9. Machine selon la revendication 1, caractérisée en ce que la tige d'entraînement (17) est sous forme d'une tige dentée (18), dans laquelle engrène un pignon d'entraînement (7).

Fig.1

Fig.2